# EUROPEAN PATENT APPLICATION

(11) **EP 4 563 647 A1**
(43) Date of publication of application: **04.06.2025**
(21) Application number: 23846418.4
(22) Date of filing: 21.07.2023
(51) Int. Cl.: C08L 27/18, C08K 3/22

(54) **NON-BLACK CONDUCTIVE POLYTETRAFLUOROETHYLENE COMPOSITION AND MOLDED BODY**

(30) Priority: 29.07.2022 JP 2022121952
(71) Applicant: Daikin Industries, Ltd., Osaka-shi, Osaka 530-0001 (JP); Daikin Compounding Italy S.p.A., 25060 Collebeato (BS) (IT)
(72) Inventor: SUGITANI, Maho, Osaka-Shi, Osaka 530-0001 (JP); SAKAMOTO, Masahiko, Osaka-Shi, Osaka 530-0001 (JP); YOSHIDA, Ken, 25060 Collebeato (BS) (IT)
(74) Representative: Hoffmann Eitle
(86) International application number: PCT/JP2023/026875
(87) International publication number: WO 2024/024688

(57) **Abstract**

The disclosure aims to provide a polytetrafluoroethylene composition and a molded article that are non-black and that have excellent conductivity. The disclosure relates to a non-black conductive polytetrafluoroethylene composition containing: polytetrafluoroethylene; and a non-black conductive filler containing at least one selected from the group consisting of antimony-doped tin oxide and phosphorus-doped tin oxide.

## Description

### TECHNICAL FIELD

The disclosure relates to non-black conductive polytetrafluoroethylene compositions and molded articles.

### BACKGROUND ART

Adding a conductive filler is a known technique to impart conductivity to fluororesin.

Patent Literature 1 discloses a white conductive fluororesin composition containing melt processible fluororesin and zinc oxide powder.

### CITATION LIST

### - Patent Literature

Patent Literature 1: JP 2013-136675 A

### SUMMARY OF INVENTION

### - Technical Problem

The disclosure aims to provide a polytetrafluoroethylene composition and a molded article that are non-black and have excellent conductivity.

### - Solution to Problem

The disclosure (1) relates to a non-black conductive polytetrafluoroethylene composition containing: polytetrafluoroethylene; and a non-black conductive filler containing at least one selected from the group consisting of antimony-doped tin oxide and phosphorus-doped tin oxide.

The disclosure (2) relates to the non-black conductive polytetrafluoroethylene composition according to the disclosure (1), wherein the non-black conductive polytetrafluoroethylene composition has a volume resistivity of 1.0 × 10³ to 1.0 × 10⁷ Ω·cm.

The disclosure (3) relates to the non-black conductive polytetrafluoroethylene composition according to the disclosure (1) or (2), wherein the non-black conductive filler is contained in an amount of 10 to 40% by mass of the composition.

The disclosure (4) relates to a molded article obtainable by molding the non-black conductive polytetrafluoroethylene composition according to any one of the disclosures (1) to (3).

The disclosure (5) relates to the molded article according to the disclosure (4), which is a sealing material.

### - Advantageous Effects of Invention

The disclosure can provide a polytetrafluoroethylene composition and a molded article that are non-black and that have excellent conductivity.

### DESCRIPTION OF EMBODIMENTS

The disclosure is described in detail below.

The disclosure relates to a non-black conductive polytetrafluoroethylene composition containing: polytetrafluoroethylene (PTFE); and a non-black conductive filler containing at least one selected from the group consisting of antimony-doped tin oxide and phosphorus-doped tin oxide (hereinafter also referred to as the composition of the disclosure).

Conventional conductive filler commonly added to PTFE is carbon black, which is black in color, and has difficulty in providing non-black molded articles. The composition of the disclosure contains a specific non-black conductive filler and thus is non-black and has excellent design. The composition of the disclosure also has excellent conductivity.

The PTFE may be a high molecular weight PTFE.

The PTFE preferably has a standard specific gravity (SSG) of 2.130 to 2.280. The standard specific gravity is more preferably 2.135 or higher, while more preferably 2.230 or lower, still more preferably 2.200 or lower. The standard specific gravity is measured by the water displacement method in conformity with ASTM D792 using a sample molded in conformity with ASTM D4894.

The term "high molecular weight" for PTFE means that the standard specific gravity falls within the above range.

The PTFE preferably has non-melt secondary processibility. The non-melt secondary processibility refers to a property of a polymer that prevents the measurement of melt flow rate at temperatures higher than the melting point in conformity with ASTM D1238 and D2116, in other words, a property that prevents easy flow of the polymer even within a melting point range.

The PTFE preferably has a melting point of 324°C to 360°C. The melting point is a value determined as the temperature corresponding to the maximum value on a heat-of-fusion curve at a temperature-increasing rate of 10°C/min using a differential scanning calorimeter (DSC).

The PTFE may be a homopolymer of TFE or may be a modified PTFE containing a polymerized unit based on TFE (TFE unit) and a polymerized unit based on a modifying monomer (modifying monomer unit). The modified PTFE may contain 99.0% by mass or more of a TFE unit and 1.0% by mass or less of a modifying monomer unit. The modified PTFE may consist of a TFE unit and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, further more preferably 0.010% by mass. The upper limit of the amount of the modifying monomer unit is more preferably 0.90% by mass, still more preferably 0.50% by mass, further preferably 0.40% by mass, further more preferably 0.30% by mass, still further more preferably 0.20% by mass, particularly preferably 0.15% by mass, more particularly preferably 0.10% by mass.

The modifying monomer unit herein means a moiety that is part of the molecular structure of PTFE and is derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE, and examples thereof include: perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ether; perfluoroallyl ether; (perfluoroalkyl)ethylene; and ethylene. One modifying monomer may be used or a plurality of modifying monomers may be used.

Examples of the perfluorovinyl ether include, but are not limited to, unsaturated perfluoro compounds represented by the following formula (A):

CF₂=CF-ORf (A)

wherein Rf is a perfluoroorganic group. The "perfluoroorganic group" herein means an organic group in which all hydrogen atoms bonded to any carbon atom are replaced by fluorine atoms. The perfluoroorganic group may contain ether oxygen.

An example of the perfluorovinyl ether is a perfluoro(alkyl vinyl ether) (PAVE) represented by the formula (A) wherein Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include: those represented by the formula (A) wherein Rf is a C4-C9 perfluoro(alkoxyalkyl) group; those represented by the formula (A) wherein Rf is a group represented by the following formula: 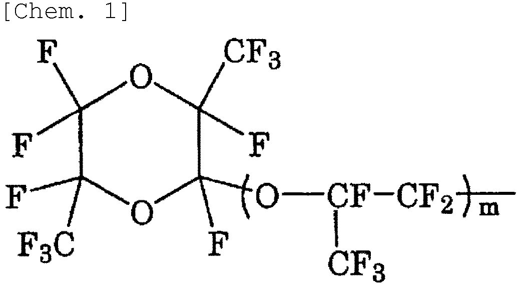 wherein m is 0 or an integer of 1 to 4; and those represented by the formula (A) wherein Rf is a group represented by the following formula: 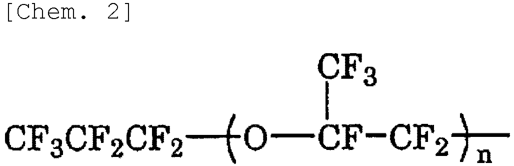 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORf¹ (B)

wherein Rf¹ is a perfluoroorganic group.

Rf¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

The PTFE is preferably in the form of particles and preferably has an average particle size of 1 to 2000 µm. The average particle size is more preferably 1000 µm or smaller, still more preferably 700 µm or smaller, while more preferably 10 µm or greater, still more preferably 15 µm or greater. Too large an average particle size may cause a difficulty in molding the PTFE or mixing the PTFE with filler, while too small an average particle size may cause poor fluidity of the PTFE composition.

The average particle size is defined as the particle size corresponding to 50% of the cumulative volume in the particle size distribution determined using a laser diffraction particle size distribution analyzer at a dispersive pressure of 3.0 bar without cascade impaction. The laser diffraction particle size distribution analyzer may be HELOS & RODOS available from Jeol Ltd.

The PTFE is preferably a PTFE molding powder. The PTFE molding powder is a powder obtainable by suspensionpolymerizing TFE. The suspension polymerization can be performed by a known method. For example, without or with a limited amount of a fluorine-containing anionic surfactant, a polymerization initiator is dispersed in an aqueous medium and monomers required to form the PTFE are polymerized therein, whereby suspension-polymerized PTFE particles can be isolated directly.

The PTFE molding powder may be one obtained by a known method of granulating the particles obtained by polymerization.

In the composition of the disclosure, the amount of the PTFE is preferably 60 to 90% by mass, more preferably 70 to 90% by mass, still more preferably 70 to 85% by mass of the composition.

The non-black conductive filler in the composition of the disclosure includes at least one selected from the group consisting of antimony-doped tin oxide and phosphorus-doped tin oxide.

Using any of these specific non-black conductive fillers can provide a PTFE composition that is non-black and has excellent conductivity even without zinc oxide.

A small amount of the non-black conductive filler can provide excellent conductivity, reducing deterioration of the tensile strength at break and the tensile elongation at break.

The non-black conductive filler may consist of at least one selected from the group consisting of antimony-doped tin oxide and phosphorus-doped tin oxide, or may be one including base particles coated with at least one selected from the group consisting of antimony-doped tin oxide and phosphorus-doped tin oxide.

The non-black conductive filler is preferably free from zinc oxide.

In an embodiment where the coating is formed from at least one selected from the group consisting of antimony-doped tin oxide and phosphorus-doped tin oxide, examples of the base particles include talc, mica, glass flakes, SiO₂ flakes, TiO₂ flakes, and Al₂O₃ flakes. Preferred among these are talc and mica.

In an embodiment where the coating is formed from at least one selected from the group consisting of antimony-doped tin oxide and phosphorus-doped tin oxide, the amount of the coating is preferably 20 to 40% by mass of the total amount of the coating and the base particles.

The non-black conductive filler is preferably at least one selected from the group consisting of (a) antimony-doped tin oxide particles; (b) particles including base particles of at least one selected from the group consisting of talc and mica coated with antimony-doped tin oxide; and (c) phosphorus-doped tin oxide particles. To achieve much better conductivity, more preferred is at least one selected from the group consisting of (a) antimony-doped tin oxide particles and (b) particles including base particles of at least one selected from the group consisting of talc and mica coated with antimony-doped tin oxide.

The non-black conductive filler preferably has an average particle size of 1 to 100 µm, more preferably 1 to 30 µm, still more preferably 1 to 10 µm.

The average particle size is defined as the particle size corresponding to 50% of the cumulative volume in the particle size distribution determined using a laser diffraction particle size distribution analyzer at a dispersive pressure of 3.0 bar without cascade impaction. The laser diffraction particle size distribution analyzer may be HELOS & RODOS available from Jeol Ltd.

In the composition of the disclosure, the amount of the non-black conductive filler is preferably 10 to 40% by mass, more preferably 10 to 30% by mass, still more preferably 15 to 30% by mass of the composition.

The composition of the disclosure may consist of the PTFE and the non-black conductive filler, or may further contain a different component as appropriate.

The different component added may be a combination of a variety of additives such as metal, inorganic or organic reinforcing filler, a compatibilizer, a lubricant (carbon fluoride, carbon graphite, molybdenum disulfide), and a stabilizer.

The composition of the disclosure is obtainable by mixing the PTFE and the non-black conductive filler as well as a different component added as appropriate using a mixer such as a V-shaped blender, a tumbler mixer, a Henschel mixer, a ball mixer, or a lödige mixer.

The composition of the disclosure has conductivity. To achieve much better conductivity, the volume resistivity is preferably 1.0 × 10³ to 1.0 × 10⁷ Ω·cm, more preferably 1.0 × 10³ to 6.0 × 10⁶ Ω·cm, still more preferably 1.0 × 10³ to 2.0 × 10⁶ Ω·cm, particularly preferably 1.0 × 10⁴ to 2.0 × 10⁶ Ω·cm.

The volume resistivity is determined by the following method.

The composition is pressure-molded at a molding pressure of 50 MPa and fired at 370°C, whereby a cylindrical molded article (outer diameter: 12 mm, height: 40 mm) is obtained. The direct current resistance of this molded article is measured using a digital multimeter (HT26, available from HT Italia), and the volume resistivity (Ω·cm) is calculated by the following formula: Volume resistivity (Ω·cm) = measured value (Ω) × cross-sectional area of cylinder (cm2)/height of cylinder (cm) wherein the cross-sectional area of the cylinder corresponds to the cross-sectional area of a plane perpendicular to the height direction.

The composition of the disclosure can be suitably used as a molding material. The disclosure also relates to a molded article obtainable by molding the composition of the disclosure.

The molded article is non-black and thus has excellent design. The molded article also has excellent conductivity.

The molded article of the disclosure also has good tensile strength at break and good tensile elongation at break.

Examples of methods of molding the composition of the disclosure include, but are not limited to, compression molding, ram extrusion molding, and isostatic molding. Preferred among these is compression molding.

The molded article of the disclosure may have any shape such as a sheet shape, a film shape, a ring shape, a rod shape, a pipe shape, or a fibrous shape.

The molded article of the disclosure is expected to expand into applications, including sealing materials such as gaskets and packings, rollers and tubes of OA equipment, sanitary pipes for foods and chemicals, and inner linings for tanks.

Preferred among these are sealing materials such as gaskets and packings.

### EXAMPLES

The disclosure is more specifically described hereinbelow with reference to examples, but the disclosure is not limited to these examples.

The following materials were used in the examples and the comparative examples.

### <Polytetrafluoroethylene (PTFE)>

- PTFE 1: Polyflon M-18F, Daikin Industries, Ltd., TFE homopolymer, standard specific gravity (SSG): 2.164, melting point: 345°C, average particle size: 20 µm

### <Conductive filler>

- Carbon black
- Non-black conductive filler (1): zinc oxide
- Non-black conductive filler (2): antimony-doped tin oxide (average particle size: 5 µm)
- Non-black conductive filler (3): phosphorus-doped tin oxide (average particle size: 4 µm)

The physical properties were determined by the following methods.

### <Average particle size>

The average particle size was defined as the particle size corresponding to 50% of the cumulative volume in the particle size distribution determined using a laser diffraction particle size distribution analyzer (HELOS & RODOS, available from Jeol Ltd.) at a dispersive pressure of 3.0 bar without cascade impaction.

### <Melting point>

The melting point was determined as the temperature corresponding to the maximum value on a heat-of-fusion curve at a temperature-increasing rate of 10°C/min using a differential scanning calorimeter (DSC).

### <Volume resistivity>

A PTFE composition was pressure-molded at a molding pressure of 50 MPa and fired at 370°C, whereby a cylindrical molded article (outer diameter: 12 mm, height: 40 mm) was obtained. The direct current resistance of this molded article was measured using a digital multimeter (HT26, available from HT Italia), and the volume resistivity (Ω·cm) was calculated by the following formula: Volume resistivity (Ω·cm) = measured value (Ω) × cross-sectional area of cylinder (cm2)/height of cylinder (cm) wherein the cross-sectional area of the cylinder corresponds to the cross-sectional area of a plane perpendicular to the height direction.

### <Tensile strength at break and tensile elongation at break>

These parameters were measured in conformity with ASTM D4745.

### Comparative Example 1

The polytetrafluoroethylene resin powder (PTFE 1 described above), 97 parts by mass, obtained by suspension polymerization was mixed with Carbon black listed above, 3 parts by mass, using a Henschel mixer, whereby a PTFE composition was obtained.

### Comparative Examples 2 to 4 and Examples 1 to 5

PTFE compositions were obtained as in Comparative Example 1 except that the type and amount of the conductive filler fed were changed as shown in Table 1.

Table 1 shows the results.

**[Table 1]**

| | PTFE | | Conductive filler | | Evaluation | | | |
|---|---|---|---|---|---|---|---|---|
| | Type | Amount (mass%) | Type | Amount (mass%) | Color | Volume resistivity (Ω·cm) | Tensile strength at break (MPa) | Tensile elongation at break (%) |
| Comparative Example 1 | PTFE1 | 97 | Carbon black | 3 | Black | 2.80E+04 | 30 | 320 |
| Comparative Example 2 | PTFE1 | 80 | Non-black conductive filler (1) | 20 | Non-black | O.L. | 26 | 288 |
| Comparative Example 3 | PTFE1 | 70 | Non-black conductive filler (1) | 30 | Non-black | 3.20E+06 | 21 | 243 |
| Comparative Example 4 | PTFE1 | 60 | Non-black conductive filler (1) | 40 | Non-black | 4.90E+05 | 13 | 150 |
| Example 1 | PTFE1 | 85 | Non-black conductive filler (2) | 15 | Non-black | 9.20E+05 | 24 | 281 |
| Example 2 | PTFE1 | 80 | Non-black conductive filler (2) | 20 | Non-black | 1.20E+05 | 18 | 289 |
| Example 3 | PTFE1 | 70 | Non-black conductive filler (2) | 30 | Non-black | 1.60E+04 | 9 | 77 |
| Example 4 | PTFE1 | 60 | Non-black conductive filler (2) | 40 | Non-black | 7.00E+03 | 5 | 26 |
| Example 5 | PTFE1 | 70 | Non-black conductive filler (3) | 30 | Non-black | 1.90E+06 | 13 | 140 |

## Claims

1. A non-black conductive polytetrafluoroethylene composition comprising:
polytetrafluoroethylene; and
a non-black conductive filler containing at least one selected from the group consisting of antimony-doped tin oxide and phosphorus-doped tin oxide.

2. The non-black conductive polytetrafluoroethylene composition according to claim 1,
wherein the non-black conductive
polytetrafluoroethylene composition has a volume resistivity of 1.0 × 10³ to 1.0 × 10⁷ Ω·cm.

3. The non-black conductive polytetrafluoroethylene composition according to claim 1 or 2,
wherein the non-black conductive filler is contained in an amount of 10 to 40% by mass of the composition.

4. A molded article obtainable by molding the non-black conductive polytetrafluoroethylene composition according to any one of claims 1 to 3.

5. The molded article according to claim 4, which is a sealing material.
